Europäisches Patentamt

European Patent Office

Office européen des brevets

(11) Veröffentlichungsnummer: **0 095 009**
A1

# (12) EUROPÄISCHE PATENTANMELDUNG

(21) Anmeldenummer: 82810219.4

(22) Anmeldetag: 21.05.82

(51) Int. Cl.³: **C 03 C 27/04**
C 03 C 17/06, G 04 B 39/02
C 23 C 13/02
//C25D5/54

(43) Veröffentlichungstag der Anmeldung:
30.11.83 Patentblatt 83/48

(84) Benannte Vertragsstaaten:
AT BE CH DE FR GB IT LI LU NL SE

(71) Anmelder: W. BLOESCH AG
Moosstrasse 68
CH-2540 Grenchen(CH)

(72) Erfinder: Flury, Ernst
Bachtelenrain 1
CH-2540 Grenchen(CH)

(74) Vertreter: Seehof, Michel et al,
c/o AMMANN PATENTANWAELTE AG BERN
Schwarztorstrasse 31
CH-3001 Bern(CH)

(54) Verfahren zur Herstellung eines verlötbaren Glasstücks.

(57) Beim Verfahren zur Herstellung eines verlötbaren Glasstücks wird auf die Dekorschicht (2) eine das Diffundieren von im Lot enthaltenen Substanzen verhindernde Sperrschicht (3) und darauf eine das Verlöten fördernde Schicht (4) aufgedampft. Das Glasstück kann beispielsweise ein Uhrenglas (1) sein, das auf eine Uhrenschale gelötet wird. Als Dekormaterial kann unter anderem Gold, Nickel oder Chrom oder verschiedene aus einer Metallschicht hergestellte Farben verwendet werden, während als Sperrschicht Chrom oder Nickel aufgedampft werden kann. Für die das Verlöten fördernde Schicht kann Kupfer, Gold oder Silber verwendet werden.

Das Anbringen einer Sperrschicht verhindert das Verfärben der Dekorschicht, während die das Verlöten fördernde Schicht eine bessere Verbindung zwischen dem Glasstück und dem Teil auf den das Glasstück aufgelötet wird, herstellt. Ausserdem kann herkömmlicher Lötzinn verwendet werden.

- 1 -

## VERFAHREN ZUR HERSTELLUNG EINES VERLOETBAREN GLASSTUECKS

Die vorliegende Erfindung bezieht sich auf ein Verfahren zur Herstellung eines verlötbaren Glasstücks, das mit einem Dekor versehen ist, wobei das Glasstück ein mit einem Metalldekor versehenes Uhrenglas aus Mineralglas oder Saphir sein kann, das auf eine Uhrenschale gelötet wird.

Insbesondere in der Uhren- und Schmuckindustrie ergeben sich oft Probleme, falls die Gläser, d.h. Uhrengläser und dergleichen an einer Uhrenschale oder Schmuckgegenstand befestigt werden müssen. Insbesondere bei der Verwendung von Metalldekors auf Uhrengläsern oder dergleichen, die in der Regel am Rand angebracht werden einerseits und der Verwendung von Hartmetallschalen oder Schmuckgegenständen andererseits ergeben sich grosse Schwierigkeiten bei der Befestigung von solchen Gläsern, wobei dafür unter anderem folgende Befestigungsarten vorgesehen sein können: Einpressen der Gläser in einen Metallreif, wobei diese Anwendung schwierig bei Mineral- und Saphirgläsern ist, da diese durch die Spannung springen können und dies bei Formgläsern nicht möglich ist; Aufschrauben der Gläser auf die Schale, wobei dazu eine Kunststoffdichtung benötigt wird, die einer Alterung unterworfen ist und dadurch undicht wird und ausserdem einen relativ breiten Streifen benötigt, der eine elegante Gestaltung des Glases und der Schale verhindert; Verkleben der Gläser mit der Schale, wobei der Klebstoff einer Alterung unterworfen und daher undicht wird und auch dort eine relativ breite Klebstoffzone benötigt wird.

Es ist ferner bekannt, Gläser mit der Uhrenschale zu verlöten. Im Falle von Gläsern, die mit einem Dekor, die in der Regel aus aufgedampften Metallschichten bestehen versehen sind, können sich dadurch Probleme ergeben, dass die erste, sichtbare Dekorschicht sich bei Verlöten verfärbt. Dies ist darauf zurückzuführen, dass Bestandteile des Lotes in diese Schicht diffundieren. Dieser Verfärbung kann dadurch entgegengewirkt werden, dass ein Lot verwendet wird, das einen hohen Anteil des gleichen Metalls enthält wie die sichtbare Dekorschicht. Dadurch ist aber die Verwendung der brauchbaren Metalle für die Dekorschicht stark eingeschränkt, da sich nicht alle Metalle als Lotbestandteile verwenden lassen. Bei anderen Metallen, z.B. bei Gold, muss der Anteil zudem relativ hoch sein, d.h. über 20%. Dadurch muss die Löttemperatur sehr hoch, bis über 400° C gewählt werden und die Verlötung wird stark erschwert. Zudem sind die Kosten von solchen speziell angepassten Lote hoch.

Es ist daher Aufgabe der vorliegenden Erfindung ein Verfahren anzugeben, mit welchem mit Dekorschichten versehene Gläser hergestellt werden, die sich mit handelsüblichen Lote mit hoher Festigkeit und mitteltiefen Schmelztemperaturen von etwa 200-250° C verlöten lassen und wobei eine sehr grosse Auswahl von verschiedenen Metallen für die Dekorschicht ermöglicht wird und zudem eine bessere Lötverbindung hergestellt werden kann. Ein solches Verfahren wird in den Ansprüchen beschrieben.

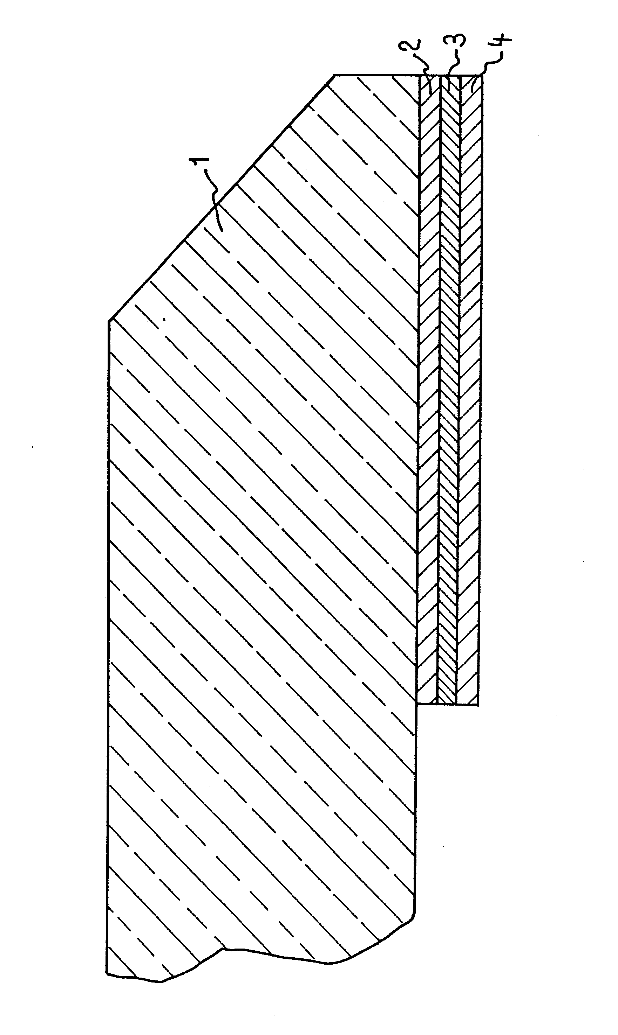

Die Erfindung wird im folgenden anhand einer einzigen Figur eines Ausführungsbeispiels näher erläutert werden.

Man erkennt das Glasstück 1, beispielsweise ein Uhrenglas aus Mineralglas oder Saphir, darüber eine aufgedampfte Dekorschicht 2 aus Au, Ag, Ni, Cr, Pd oder metallischen Farben braun, blau, schwarz, usw. Darüber wird eine Sperrschicht 3 aufgebracht, die die Fähigkeit aufweisen muss, Bestandteile des Lotes zu binden und ein Hindurchdiffundieren auf die Dekorschicht zu verhindern. Versuche haben ergeben, dass sich beispielsweise Schichten aus Chrom oder Nickel oder eine Legierung beider Metalle gut dazu eignen, doch können auch andere geeignete Metalle dafür verwendet werden. Auf diese Sperrschicht wird eine das Verlöten fördernde Schicht 4 aufgebracht, wobei vorzugsweise Cu, Au oder Ag verwendet wird. Diese oberste Schicht bindet sich mit dem Lot schneller als beispielsweise eine Schicht aus Chrom oder Nickel. Dadurch wird einerseits das Aufheizen der übrigen Schichten herabgesetzt und eine bessere Verbindung mit dem Lot und dem Gegenstand auf den das Glas gelötet werden soll erheblich verbessert. Dadurch kann auch die besonders bei Uhren wichtige Wasser- und Staubdichtheit erhöht werden. Da die Schichten in der Regel durch Aufdampfen aufgebracht werden, kann deren Schichtdicke kontrolliert werden derart, dass diese möglichst klein gehalten wird, um eine gute Verlötung zu erzielen.

Während die schematische Darstellung obigen Ausführungsbeispiels der Uebersichtlichkeit halber einfach gehalten ist, sind eine Vielzahl von Variationsmöglichkeiten denkbar. So kann die Metalldekoration aus verschiedenen Schichten von verschiedenen Metallen oder metallischen Farben bestehen, die zudem nach bekannten Aetzverfahren selektiv beschichtet worden sind. Ausserdem ist es möglich, anstatt einer Sperrschicht zwei oder unter Umständen mehrere Sperrschichten zu verwenden mit verschiedenen Metallen oder Metallegierungen, um eine Diffusion von Lotbestandteilen vollständig auszuschliessen. Im dargestellten Beispiel wird die ganze Umrandung des Uhrenglases wasser- und luftdicht mit einer Uhrenschale aus Metall, Hartmetall oder Sinterhartmetall verlötet. Im Falle von Zifferblättern, beispielsweise aus Saphirglas ist ein Verlöten nur an einigen Punkten, beispielsweise an zwei Punkten, mit Füssen notwendig, während in diesem Falle auch das Metalldekor nur an verschiedenen Stellen aufgetragen ist. Dabei hat es sich gezeigt, dass es zweckmässig ist, die das Verlöten fördernde Schicht 4 kleiner zu halten als die Dekorschicht, wodurch vermieden wird, dass sich das Lot bis und über den Rand der Dekorschicht ausbreitet und dadurch sichtbar wird.

Das Verlöten des derart vorbereiteten Glasstückes mit dem anderen Teil geschieht auf herkömmliche Weise, wobei das Lot in Form von Paste, Draht oder als ausgestanzte Folie vorliegen kann.

Während sich das Aufdampfungsverfahren zum Aufbringen der Schichten besonders gut bewährt hat, ist es auch möglich, die Schichten auf galvanischem Wege aufzubringen.

- 5 -

Patentansprüche:

1. Verfahren zur Herstellung eines verlötbaren Glasstücks, das mit einem Dekor versehen ist,
dadurch gekennzeichnet,
dass auf das Dekor, an den zu verlötenden Stellen, mindestens eine das Diffundieren von im Lot enthaltenen Substanzen verhindernde Sperrschicht aufgebracht wird.

2. Verfahren nach Anspruch 1,
dadurch gekennzeichnet,
dass auf die Sperrschicht eine das Verlöten fördernde Schicht aufgebracht wird.

3. Verfahren nach Anspruch 1 oder 2,
dadurch gekennzeichnet,
dass als Sperrschicht Chrom, Nickel oder eine Legierung der beiden Metalle aufgebracht wird.

4. Verfahren nach einem der Ansprüche 1 bis 3,
dadurch gekennzeichnet,
dass als das Verlöten fördernde Schicht Cu, Au oder Ag aufgebracht wird.

5. Verfahren nach einem der Ansprüche 1 bis 4,
dadurch gekennzeichnet,
dass als Dekor Au, Ag, Ni, Cr, Pd oder Farben erzeugende Metalle aufgebracht werden.

6. Verfahren nach einem der Ansprüche 1 bis 5,
dadurch gekennzeichnet,
dass die das Verlöten förderne Schicht stellenweise
aufgebracht wird, wobei die Stellen einen kleineren
Bereich umfassen als die darunter liegende Dekorschicht.

7. Verfahren nach einem der Ansprüche 1 bis 5,
dadurch gekennzeichnet,
dass das Glasstück ein Uhrenglas aus Saphir- oder Mineralglas ist.

8. Verfahren nach einem der Ansprüche 1-7,
dadurch gekennzeichnet,
dass mindestens eine Schicht aufgedampft wird.

Europäisches
Patentamt

## EUROPÄISCHER RECHERCHENBERICHT

## EINSCHLÄGIGE DOKUMENTE

EP 82810219.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>DE - A1 - 3 040 493</u> (THE BABCOCK & WILCOX CO.)<br><br>* Seite 3, Zeilen 21-24; Seite 6, Zeilen 3-31; Seite 8, Zeilen 11-14, 30-37; Seite 9, Zeilen 1-29; Fig. 3; Patentansprüche 1-6 *<br><br>-- | 1-5,8 | C 03 C 27/04<br>C 03 C 17/06<br>G 04 B 39/02<br>C 23 C 13/02//<br>C 25 D 5/54 |
| A | <u>DE - A1 - 2 711 258</u> (AERONUTRO-<u>NIC FORD CORPORATION</u>)<br><br>* Seite 7, Zeilen 18-26; Seite 8, Zeilen 21-29; Seite 10, Zeilen 1-11; Seite 11; Seite 12, Zeilen 1-9; Fig. 2 *<br><br>-- | 1,2,4-8 | |
| A | <u>CH - A - 449 376</u> (BALZERS PATENT-<u>UND LIZENZ-ANSTALT</u>)<br><br>* Spalte 2, Zeilen 10-36 *<br><br>-- | 1,2,5,8 | **RECHERCHIERTE SACHGEBIETE (Int. Cl. ³)** |
| A | <u>US - A - 3 657 076</u> (BERNSTEIN)<br><br>* Gesamt *<br><br>---- | 1,2,5,8 | C 03 C<br>C 23 C<br>G 04 B<br>C 25 D |

X   Der vorliegende Recherchenbericht wurde für alle Patentansprüche erstellt.

| Recherchenort | Abschlußdatum der Recherche | Prüfer |
|---|---|---|
| WIEN | 18-01-1983 | HAUSWIRTH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82